# EUROPEAN PATENT SPECIFICATION

(11) **EP 1 219 857 B1**
(45) Date of publication and mention of the grant of the patent: **23.03.2005**
(21) Application number: 00128693.9
(22) Date of filing: 29.12.2000
(51) Int. Cl.: F16F 9/53, F16F 9/28

(54) **Double-tube shock absorber using a hydraulic fluid and a magnetorheological fluid**
Zweirohr-Schwingungsdämpfer, gefüllt mit hydraulischer Flüssigkeit und magnetorheologischer Flüssigkeit
Amortisseur à double tube utilisant un fluide hydraulique et un fluide magnétorhéologique

(43) Date of publication of application: 03.07.2002
(73) Proprietor: Mando Corporation, Pyungtaek-si, Kyonggi-do 451-821 (KR)
(72) Inventor: Koh, You-Seok, Mando Corporat., Central R&D Center, Pyungtaek-Si, Kyonggi-do 451-821 (KR)
(74) Representative: Lorenz, Werner, Dr.-Ing.

(56) References cited:
- EP-A- 0 607 545
- WO-A-99/27273
- DE-A- 4 200 977
- GB-A- 2 267 947
- US-A- 5 284 330
- US-A- 5 956 951

## Description

The present invention relates to a shock absorber for use in a motor vehicle; and, more particularly, to a double-tube shock absorber using a magnetorheological (MR) fluid and a hydraulic fluid (prior art document EP-A-0 607 545 shows the features of the preamble of claim 1).

Typically, motor vehicles are equipped with a suspension system to improve road-adherence and to provide ride-comfort for occupants. The suspension system includes springs and shock absorbers. The shock absorbers are disposed in parallel with the springs to damp the vibration of the springs.

The shock absorbers utilize a fluid flow system incorporating therein either a hydraulic fluid having a constant viscosity or a fluid having a changeable viscosity, e.g., magnetorheological (MR) fluid. The use of MR fluid is advantageous in that the viscosity thereof can be controlled with the application of a magnetic field in order to adjust a damping force being exerted on the springs depending on a traveling condition.

Particularly, MR fluid is a free-flowing liquid with a viscosity. Exposure to a magnetic field can transform the liquid into a near-solid in milliseconds; and with the removal of the magnetic field, the fluid can be returned to its liquid state just as quickly. The degree of change in the viscosity of the MR fluid is proportional to the magnitude of the applied magnetic field.

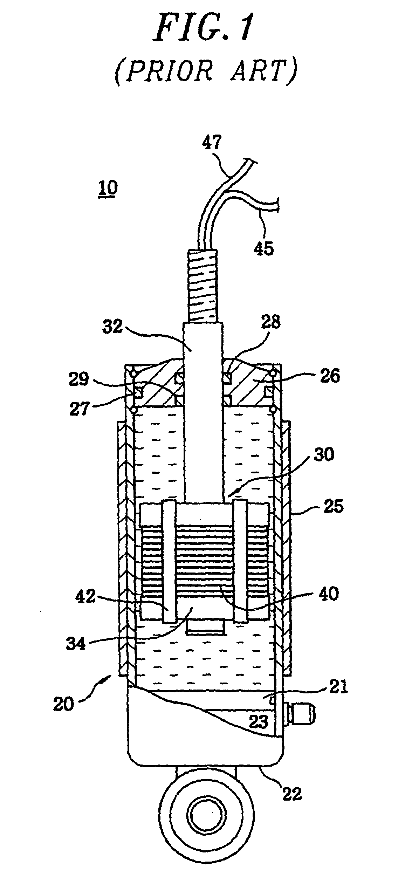

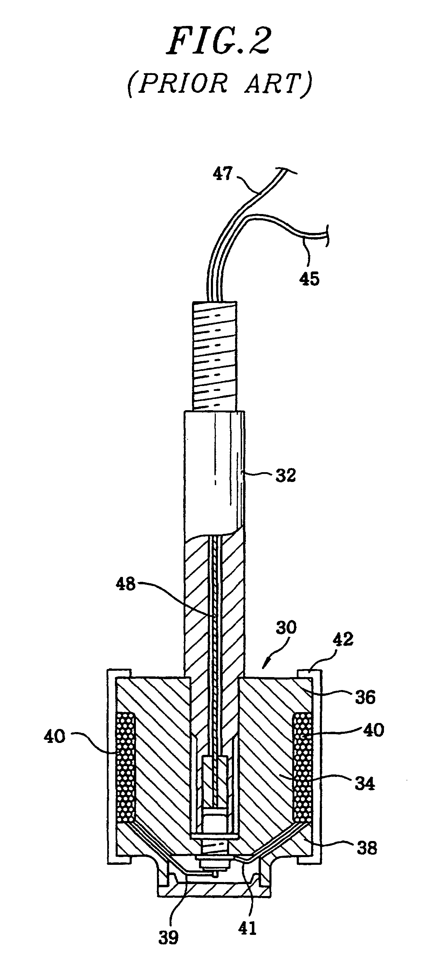

Figs. 1 and 2 are a cross sectional view illustrating a conventional shock absorber using an MR fluid and an enlarged cross sectional view depicting a piston assembly shown in Fig. 1, respectively, disclosed in USPN 5,284,330 entitled "MAGNETORHEOLOGICAL FLUID DEVICE" issued on January 11, 1994.

The shock absorber 10 comprises two principal components: a housing 20 and a piston assembly 30. The housing 20 includes a volume of magnetorheological (MR) fluid. The fluid includes carbonyl iron particles suspended in silicone oil.

The housing 20 is generally of a cylindrical tube with a first closed end 22. A cylindrical sleeve 25 may be affixed to an inner cylinder by any conventional means, e.g., press fit, welding or adhesive to increase the cross-sectional surface area of the housing 20. The cylinder is closed at a second end thereof by an end member 26. A first seal 27 extends about an outer periphery of the end member 26 to prevent fluid leakage between the housing 20 and the end member 26.

A second annular seal 28 is housed in a groove in an inner periphery of the end member 26 and seals against a piston rod 32. A scraper 29 can be used to wipe the MR fluid off the surface of piston rod 32 so as to minimize the loss of MR fluid past the second annular seal 28.

The housing 20 is provided with a floating piston 21 to separate the MR fluid from a pressurized accumulator 23. The pressurized accumulator 23 is necessary to accommodate a fluid displaced by the piston rod 32 as well as to allow for thermal expansion of the fluid.

The piston assembly 30 is shown in greater detail in Fig. 2. A piston head 34 is spool shaped with an upper outwardly extending flange 36 and a lower outwardly extending flange 38. A coil 40 is wound upon the spool-shaped piston head 34 between the upper flange 36 and the lower flange 38. The piston head 34 is made of a magnetically permeable material, such as low carbon steel. Guide rails 42 are attached around an outside of the piston head 34 at particular intervals. As shown in Figs. 1 and 2, four guide rails 42 are shown spaced uniformly about a periphery of the piston head 34.

An electrical connection is made to the coil 40 through the piston rod 32 by lead wires 45 and 47. The first lead wire 45 is connected to a first end of an electrically conductive rod 48 which extends through the piston rod 32 to a Phono-jack connector 46. A center connection of the Phono-jack 46 is connected to a first end 39 of the coil 40. A second end 41 of windings of the coil 40 is attached to a "ground" connection on an outside of the Phono-jack 46. An electrical return path, then, includes the piston rod 32 and the ground lead 47.

However, such an MR shock absorber has some inherent drawbacks. First, since the MR fluid has a higher viscosity than the conventional hydraulic fluid even in the absence of a magnetic field, the MR shock absorber tends to exert a harder damping force against external forces applied thereto, resulting in a deteriorated ride-comfort under certain circumstances. Furthermore, the MR fluid is costly, increasing the manufacturing cost of the shock absorber.

It is, therefore, an object of the present invention to provide a double-tube shock absorber using a magnetorheological fluid and a hydraulic fluid.

In accordance with the present invention, there is provided a double-tube shock absorber comprising: an outer cylinder having a first working chamber; an inner cylinder located inside the first working chamber and having a second working chamber, wherein the first and the second working chamber are filled with a hydraulic fluid and a magnetorheological fluid, respectively; a first piston movably inserted into the first working chamber; a second piston having a coil movably inserted into the second working chamber, wherein each of the pistons includes one or more orifices; one or more first piston rods for leading the first piston in a reciprocating motion; and a second piston rod for leading the second piston in a reciprocating motion.

The above and other objects and features of the present invention will become apparent from the following description of preferred embodiments given in conjunction with the accompanying drawings, in which:
- Fig. 1: is a schematic cross sectional view illustrating a shock absorber using a magnetorheological fluid previously disclosed;
- Fig. 2: shows an enlarged cross sectional view illustrating a piston assembly incorporated in the shock absorber shown in Fig. 1;
- Fig. 3: offers a schematic cross sectional view depicting a double-tube shock absorber using both a magnetorheological fluid and a hydraulic fluid in accordance with the present invention;
- Fig. 4: represents a perspective view portraying piston assembly incorporated in the double-tube shock absorber shown in Fig. 3; and
- Fig. 5: provides an enlarged cross sectional view of a portion "A" shown in Fig. 3.

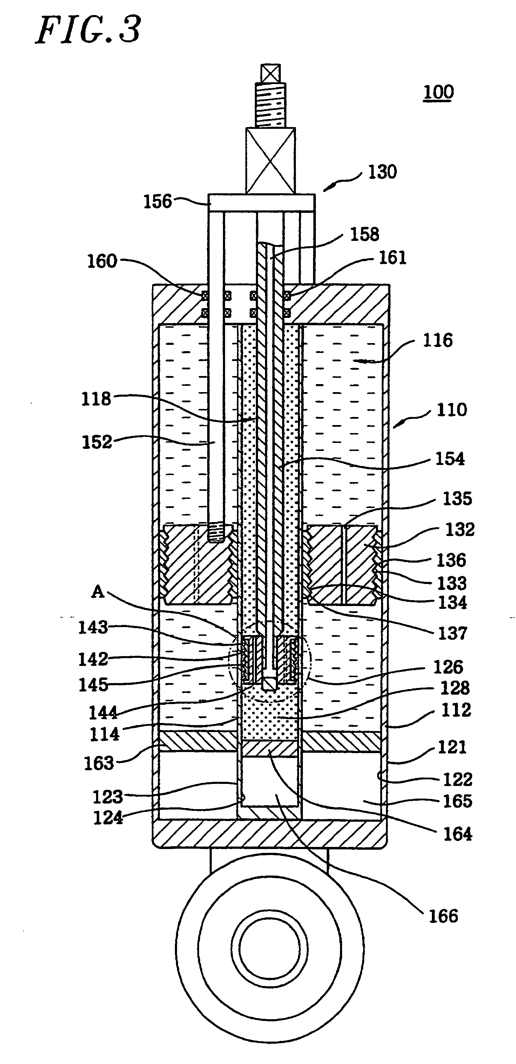

An inventive double-tube shock absorber 100 for using in a vehicle, e.g., automobile, comprises a cylinder assembly 110 and a piston assembly 130, as shown in Fig. 3.

The cylinder assembly 110 is provided with an outer cylinder 112 including an outer and an inner surface 121, 122, and an inner cylinder 114 having an outer and an inner surface 123, 124. The outer cylinder 112 incorporates therein a first working chamber 116. The inner cylinder 114 is located inside the first working chamber 116 and incorporates therein a second working chamber 118. The first and the second working chamber 116, 118 are filled with a hydraulic fluid 126 having a constant low viscosity and a magnetorheological (MR) fluid 128 having a changeable viscosity, respectively. The first and the second working chamber 116, 118 are isolated from each other for preventing the hydraulic fluid 126 and the MR fluid 128 from interflowing there between.

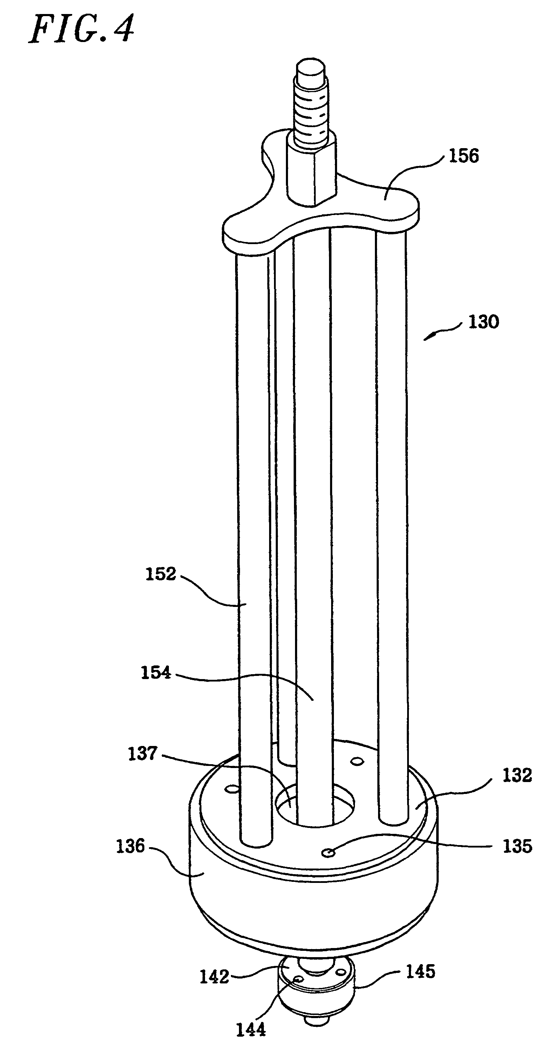

As shown in Figs. 3 and 4, the piston assembly 130 is provided with a first piston 132, a second piston 142, three of first piston rods 152, a second piston rod 154 and a rod fixture 156, as shown in Fig 4.

The first piston 132 having an outer and an inner periphery 133, 134 is movably inserted into the first working chamber 116 with horizontally adjoining its outer periphery 133 to the inner surface 122 of the outer cylinder 112 and its inner periphery 134 to the outer surface 123 of the inner cylinder 114. The first piston 132 includes three of first orifices 135 for providing vertical flowing paths for the hydraulic fluid 126 in the first working chamber 116. The first piston 132 further includes a first and a second sealing member 136, 137 made of, e.g., Teflon or the like, wherein the first and the second sealing member 136, 137 are secured on the outer periphery 133 and on the inner periphery 134 of the first piston 132, respectively, for preventing the hydraulic fluid 126 from flowing along with the outer and the inner periphery 133, 134 of the first piston 132, respectively.

The second piston 142 having an outer periphery 143 is movably inserted into the second working chamber 118 with horizontally adjoining its outer periphery 143 to the inner surface 124 of the inner cylinder 114. The second piston 142 includes three of second orifices 144 for providing vertical flowing paths for the MR fluid 128 in the second working chamber 118. The second piston 142 further includes a third sealing member 145 made of, e.g., Teflon or the like, and secured on the outer periphery 143 for preventing the MR fluid 128 from flowing along with the outer periphery 143 of the second piston 142.

Although the number of the orifices 135 and that of the orifices 144 are preferably three, respectively, in the above description, the present invention is not limited thereto. Depending on the maximum amount of damping force required to the double-tube shock absorber 100 of the present invention, one or more first and second orifices 135, 144 can be formed in the first piston 132 and the second piston 142, respectively.

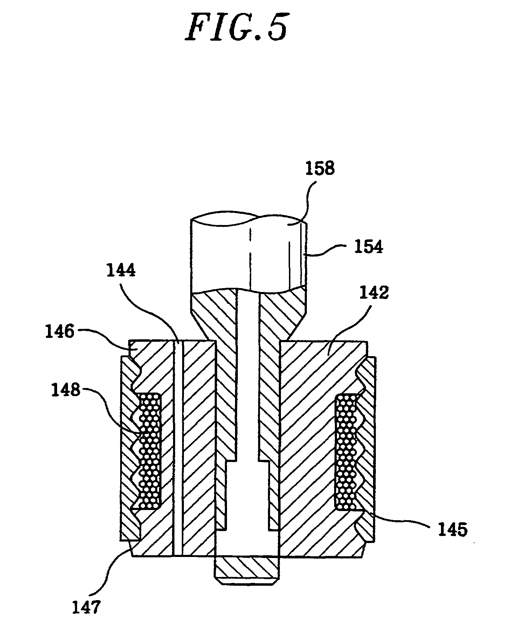

As shown in Fig. 5, the second piston 142 is structured for forming a magnetic field generator, e.g., solenoid, in such a way that the second piston 142 is shaped as a spool having an upper and a lower flange 146, 147, and is made of a magnetic permeable material, e.g., ferrite, low-carbon steel or the like, and further is convolved with a coil 148 at the outer periphery 143 thereof between the upper and the lower flange 146, 147. Accordingly, when an electrical current is applied to the coil 148, a magnetic field is generated around the second piston 142, which will, in turn, change the viscosity of the MR fluid 128 passing through the second orifices 144.

Returning to Figs. 3 and 4, three of the first piston rods 152 for leading the first piston 132 in a reciprocating motion are rigidly joined to the first piston 132 at one end thereof. While the number of the first piston rods 152 is preferably three in the above description, the present invention is not limited thereto. Considering various mechanical factors, e.g., balance, tensile force, compressive force or the like, charged to the first piston rods 152, one or more first piston rods 152 can be rigidly joined to the first piston 132.

The second piston rod 154 for leading the second piston 142 in a reciprocating motion is rigidly joined to the second piston 142 at one end thereof. The second piston rod 154 includes an interior cavity 158 where electrical connections (not shown) for applying the electric signal to the coil 148 are installed.

Another opposite ends of the first piston rods 152 and the second piston rod 154 are secured to the rod fixture 156 in such a way that the reciprocating motions of the first piston 132 and the second piston 142 are dependent on and coincident to each other during the operation of the double-tube shock absorber 100.

The double-tube shock absorber 100 further comprises a number of first and second sealing parts 160, 161, a first and a second floating piston 163, 164 and a first and a second accumulator 165, 166. The first and second sealing parts 160, 161, respectively, prevent the hydraulic fluid 126 and the MR fluid 128 from leaking along with the first piston rods 152 and the second piston rod 154, respectively. The first and the second floating piston 163, 164 are movably inserted into the outer cylinder 112 and the inner cylinder 114, respectively. Each of the accumulator 165, 166 is filled with a gas, e.g., nitrogen, wherein the first and the second accumulator 165, 166 are, respectively, necessary to accommodate the hydraulic and the MR fluid 126, 128 displaced by the first piston rods 152 and the second piston rod 154 as well as to allow for thermal expansion of the hydraulic and the MR fluid 126, 128.

As may be seen from the above, it should be appreciated that the double-tube shock absorber 100 of the present invention utilizes both the hydraulic fluid 126 in the first chamber 116 and the MR fluid 128 in the second chamber 118. Accordingly, the double-tube shock absorber 100 can sensitively respond to the impulse applied thereto by using the hydraulic fluid 126 having relatively low viscosity and, at the same time, can modulate the damping force by using the MR fluid 128 having adjustable viscosity in consideration with various factors, e.g., driving conditions, driver's controls and so on. Furthermore, the expensive MR fluid 128 is employed in only the second working chamber 118 of the inner cylinder 114, thereby reducing the amount of the MR fluid 128 needed and, hence, reducing the manufacturing cost of the double-tube shock absorber 100.

While the present invention has been shown and described with respect to the particular embodiments, it will be apparent to those skilled in the art that many changes and modifications may be made without departing from the scope of the invention defined in the appended claims.

## Claims

1. A double-tube shock absorber (100) comprising:
an outer cylinder (112) having a first working chamber (116);
an inner cylinder (114) located inside the first working chamber (116) and having a second working chamber (118);
a first piston (132) movably inserted into the first working chamber (116);
a second piston (142) movably inserted into the second working chamber (118);
one or more first piston rods (152) for leading the first piston (132) in a reciprocating motion; and
a second piston rod (154) for leading the second piston (142) in a reciprocating motion;
**characterized in that** the first and the second working chamber (116, 118) are filled with a hydraulic fluid (126) and a magnetor-heological fluid (128), respectively and **characterized by** the second piston (142) being convolved by a coil (148), wherein the first and the second piston (132, 142) include one or more orifices (135, 144), respectively.

2. The shock absorber (100) of claim 1, wherein the first and the second working chamber (116, 118) are isolated from each other for preventing the hydraulic fluid (126) and the MR fluid (128) from interflowing therebetween.

3. The shock absorber (100) of claim 1, wherein the first piston (132) is provided with an outer (133) and an inner periphery (134) and includes a first (136) and a second (137) sealing member, the first and the second sealing member (136, 137) being secured on the outer periphery (133) and on the inner periphery (134), respectively, for preventing the hydraulic fluid (126) from flowing along with the outer and the inner periphery (133, 134) of the first piston (132).

4. The shock absorber (100) of claim 1, wherein the second piston (142) is provided with an outer periphery (143) and includes a third sealing member (145) secured on the outer periphery (143) for preventing the MR fluid (128) from flowing along with the outer periphery (143) of the second piston (142).

5. The shock absorber (100) of claim 1, wherein the second piston (142) is structured to form a magnetic field generator, wherein the second piston (142) is made of a magnetic material and is convolved with the coil (148) at an outer periphery thereof.

6. The shock absorber (100) of claim 1 further comprising a rod fixture (156) rigidly holding thereon the first (152) and the second (154) piston rod at once in such a way that the reciprocating motions of the first and the second piston (132, 142) are dependent on and coincident to each other.

7. The shock absorber (100) of claim 1 further comprising a number of sealing parts (160, 161) for preventing the hydraulic fluid (126) and the MR fluid (128) from leaking along with the first piston rod (152) and the second piston rod (154).

8. The shock absorber (100) of claim 1, wherein the second piston rod (154) includes an interior cavity (158) through which an electrical current is applied to the coil (148).

9. The shock absorber (100) of claim 1 further comprising a first (163) and a second (164) floating piston movably inserted into the outer and the inner cylinder (112, 114), respectively.

10. The shock absorber (100) of claim 9 further comprising a first (165) and a second (166) accumulator filled with a gas, wherein the first and the second accumulator (165, 166) are installed in the outer and inner cylinder (112, 114), respectively.

11. A motor vehicle incorporating therein the double-tube shock absorber (100) according to claim 1.

12. A suspension system incorporating therein the double-tube shock absorber (100) according to claim 1.

## Patentansprüche

1. Zweirohr-Schwingungsdämpfer (100), welcher folgendes aufweist:
einen äußeren Zylinder (112), welcher eine erste Arbeitskammer (116) aufweist;
einen inneren Zylinder (114), der innerhalb der ersten Arbeitskammer (116) angeordnet ist und eine zweite Arbeitskammer (118) aufweist;
einen ersten Kolben (132), der beweglich in der ersten Arbeitskammer (116) eingesetzt ist;
einen zweiten Kolben (142), der beweglich in der zweiten Arbeitskammer (118) eingesetzt ist;
eine oder mehrere erste Kolbenstangen (152) zum Überführen des ersten Kolbens (132) in eine Hinund Herbewegung; und
eine zweite Kolbenstange (154) zum Überführen des zweiten Kolbens (142) in eine Hin- und Herbewegung;
**dadurch gekennzeichnet, dass**
die erste und die zweite Arbeitskammer (116,118) jeweils mit einer hydraulischen Flüssigkeit (126) und einer magnetorheologischen Flüssigkeit (128) gefüllt sind, und dadurch, dass der zweite Kolben (142) von einer Spule (148) umgeben ist, wobei der erste und der zweite Kolben (132,142) jeweils eine oder mehrere Öffnungen (135,144) aufweisen.

2. Schwingungsdämpfer (100) nach Anspruch 1, wobei die erste und die zweite Arbeitskammer (116,118) voneinander isoliert sind, um zu verhindern, dass sich die hydraulische Flüssigkeit (126) und die magnetorheologische Flüssigkeit (128) sich dazwischen vermischen.

3. Schwingungsdämpfer (100) nach Anspruch 1, wobei der erste Kolben (132) mit einer äußeren (133) und einer inneren Umfangswand (134) versehen ist und ein erstes (136) und ein zweites (137) Dichtungselement aufweist, wobei das erste und das zweite Dichtungselement (136,137) jeweils auf der äußeren Umfangswand (133) und auf der inneren Umfangswand (134) angebracht sind, um zu verhindern, dass die hydraulische Flüssigkeit (126) entlang der äußeren und der inneren Umfangswand (133,134) des ersten Kolbens (132) strömt.

4. Schwingungsdämpfer (100) nach Anspruch 1, wobei der zweite Kolben (142) mit einer äußeren Umfangswand (143) versehen ist und ein drittes Dichtungselement (145) aufweist, welches an der äußeren Umfangswand (143) angebracht ist, um zu verhindern, dass die magnetorheologische Flüssigkeit (128) entlang der äußeren Umfangswand (143) des zweiten Kolbens (142) strömt.

5. Schwingungsdämpfer (100) nach Anspruch 1, wobei der zweite Kolben (142) so ausgebildet ist, dass er einen Magnetfeldgenerator bildet, wobei der zweite Kolben (142) aus einem magnetischen Material hergestellt ist und mit der Spule (148) an einer äußeren Umfangswand desselben umgeben ist.

6. Schwingungsdämpfer (100) nach Anspruch 1, welcher des weiteren ein Stangenbefestigungselement (156) aufweist, welches die erste (152) und die zweite (154) Kolbenstange gleichzeitig starr auf eine solche Art und Weise festhält, dass die Hin- und Herbewegungen des ersten und des zweiten Kolbens (132,142) voneinander abhängig und deckungsgleich miteinander sind.

7. Schwingungsdämpfer (100) nach Anspruch 1, welcher des weiteren eine Anzahl von Dichtungsteilen (160,161) aufweist, um zu verhindern, dass die hydraulische Flüssigkeit (126) und die magnetorheologische Flüssigkeit (128) entlang der ersten Kolbenstange (152) und der zweiten Kolbenstange (154) lecken.

8. Schwingungsdämpfer (100) nach Anspruch 1, wobei die zweite Kolbenstange (154) eine innere Ausnehmung (158) aufweist, durch welche ein elektrischer Strom auf die Spule (148) aufgebracht wird.

9. Schwingungsdämpfer (100) nach Anspruch 1, welcher des weiteren einen ersten (163) und einen zweiten (164) Schwimmkolben aufweist, welche jeweils beweglich in dem äußeren und den inneren Zylinder (112,114) eingesetzt sind.

10. Schwingungsdämpfer (100) nach Anspruch 9, welcher des weiteren einen ersten (165) und einen zweiten (166) Speicher aufweist, der mit einem Gas gefüllt ist, wobei der erste und der zweite Speicher (165, 166) jeweils in dem äußeren und dem inneren Zylinder (112,114) eingebaut sind.

11. Kraftfahrzeug, in welchem der Zweirohr-Schwingungsdämpfer (100) gemäß Anspruch 1 eingebaut ist.

12. Dämpfungssystem, in welchem der Zweirohr-Schwingungsdämpfer (100) gemäß Anspruch 1 eingebaut ist.

## Revendications

1. Amortisseur (100) à double tube comprenant :
un cylindre extérieur (112) ayant une première chambre de travail (116);
un cylindre intérieur (114) disposé dans la première chambre de travail (116) et ayant une seconde chambre de travail (118);
un premier piston (132) inséré de façon mobile dans la première chambre de travail (116);
un second piston (142) inséré de façon mobile dans la seconde chambre de travail (118);
une ou plusieurs premières tiges de piston (152) pour entraîner le premier piston (132) dans un mouvement alternatif; et une seconde tige de piston (154) pour entraîner le second piston (142) dans un mouvement altematif:
**caractérisé en ce que** la première et la seconde chambre de travail (116, 118) sont remplies respectivement avec un fluide hydraulique (126) et un fluide magnétorhéologique (128) et **caractérisé par le fait que** le second piston (142) est ceinturé par une bobine (148), dans lequel le premier et le second piston (132, 142) comprennent respectivement un ou plusieurs orifices (135, 144).

2. Amortisseur (100) de la revendication 1, dans lequel la première et la seconde chambre de travail (116, 118) sont isolées l'une de l'autre pour empêcher le fluide hydraulique (126) et le fluide MR (128) d'interférer entre eux.

3. Amortisseur (100) de la revendication 1, dans lequel le premier piston (132) est pourvu d'une périphérie intérieure (134) et extérieure (133) et comporte un premier (136) et un deuxième (137) élément d'étanchéité (136, 137), le premier et le deuxième élément d'étanchéité (136, 137) étant fixés respectivement sur la périphérie extérieure (133) et sur la périphérie intérieure (134) pour empêcher le fluide hydraulique (126) de couler le long de la périphérie extérieure et intérieure (133, 134) du premier piston (132).

4. Amortisseur (100) de la revendication 1, dans lequel le second piston (142) est pourvu d'une périphérie extérieure (143) et comprend un troisième élément d'étanchéité (145) fixé sur la périphérie extérieure (143) pour empêcher le fluide MR (128) de couler le long de la périphérie extérieure (143) du second piston (142).

5. Amortisseur (100) de la revendication 1, dans lequel le second piston (142) est agencé pour former un générateur de champ magnétique, dans lequel le second piston (142) est réalisé en un matériau magnétique et est ceinturé sur sa périphérie extérieure par la bobine (148).

6. Amortisseur (100) de la revendication 1, comprenant en outre une fixation de tige (156) maintenant rigidement en même temps la première (152) et la seconde (154) tige de piston de façon que les mouvements alternatifs du premier et du second piston (132, 142) soient dépendants et coïncidants l'un l'autre.

7. Amortisseur (100) de la revendication 1, comprenant en outre plusieurs éléments d'étanchéité (160, 161) pour empêcher le fluide hydraulique (126) et le fluide MR (128) de fuir le long de la tige (152) du premier piston et de la tige (154) du second piston.

8. Amortisseur (100) de la revendication 1, dans lequel la tige (154) du second piston comporte une cavité intérieure (158) à travers laquelle un courant électrique est appliqué à la bobine (148).

9. Amortisseur (100) de la revendication 1, comprenant en outre un premier (163) et un second (164) piston flottant insérés de manière mobile respectivement dans le cylindre (112, 114) extérieur et intérieur.

10. Amortisseur (100) de la revendication 9, comprenant en outre un premier (165) et un second (166) accumulateur remplis avec un gaz, dans lequel le premier et le second accumulateur (165, 166) sont disposés respectivement dans le cylindre (112, 114) extérieur et intérieur.

11. Véhicule à moteur comprenant l'amortisseur (100) à double tube selon la revendication 1.

12. Système de suspension comprenant l'amortisseur (100) à double tube selon la revendication 1.
